# EUROPEAN PATENT APPLICATION

(11) **EP 2 360 916 A2**
(43) Date of publication of application: **24.08.2011**
(21) Application number: 10002959.4
(22) Date of filing: 19.03.2010
(51) Int. Cl.: H04N 7/035, H04N 7/088

(54) **Configuration method of vertical blanking interval data and apparatus thereof**

(30) Priority: 30.12.2009 US 650495
(71) Applicant: Himax Media Solutions, Inc., Tainan County 74148 (TW)
(72) Inventor: Hung, Cheng-Hsi, Sinshih Township Tainan County (TW)
(74) Representative: Görz, Ingo

(57) **Abstract**

A vertical blanking interval (VBI) data processing method includes: receiving at least one output signal currently outputted from at least one scan line, and utilizing a processing circuit (1004) to check a quality of the at least one output signal currently outputted from the at least one scan line according to at least one specific standard; determining an examination result according to whether the at least one output signal outputted currently from the at least one scan line complies with the at least one specific standard; and adjusting configuration of the at least one scan line according to the examination result.

## Description

The disclosed embodiments of the present invention relate to a data configuration method and related apparatus thereof according to pre-characterizing clauses of claims 1 and 7.

In a video system, certain digital data are transmitted during a vertical blanking interval (VBI) to provide various functions, and those digital data can be categorized into several standards, e.g., teletext (TT), closed captioning (CC), widescreen signaling (WSS), according to different geographical regions and applications. However, identifying corresponding standards of scan lines transmitting different digital data may be difficult, leading to obstacles for following processing procedures.

In a conventional 625-line system, about eighteen or even more scan lines are available for providing VBI data during the VBI. In addition, scan lines in an even field and an odd field can be used for VBI data transmission. Therefore, regarding the conventional 625-line system, there are totally thirty-six scan lines in a frame to be identified for their corresponding VBI data standards. Some complicated standards, e.g., a TT VBI data standard, usually require a plurality of scan lines for transmission, and those digital data transmitted via the scan lines must be processed continuously; otherwise, a malfunction might take place.

Therefore, how to identify a corresponding standard of data from scan lines or even prevent wrongfully processed data from contaminating VBI data from other scan lines and how to further correct false VBI standard configuration dynamically become major issues in this field.

This in mind, the present invention aims at providing a method and a related apparatus capable of automatically detecting a proper standard of a scan line when unknown VBI data is transmitted in the scan line and gating non-VBI data from following processing. In addition, the present invention is also capable of dynamically determining a most suitable standard when a standard VBI data from a scan line changes.

This is achieved by a data configuration method and related apparatus according to pre-characterizing clauses of claims 1 and 7, respectively. The dependent claims pertain to corresponding further developments and improvements

As will be seen more clearly from the detailed description following below, the claimed vertical blanking interval (VBI) data processing method includes receiving at least one output signal currently outputted from at least one scan line, and utilizing a processing circuit to check a quality of the at least one output signal currently outputted from the at least one scan line according to at least one specific standard, determining an examination result according to whether the at least one output signal currently outputted from the at least one scan line complies with the at least one specific standard, and adjusting configuration of the at least one scan line according to the examination result. When the at least one output signal currently outputted from the at least one scan line is not qualified for a first quality requirement, it indicates that the at least one output signal currently outputted from the at least one scan line does not comply with the at least one specific standard.

In addition, the claimed VBI data configuration apparatus includes a receiving circuit and a processing circuit. The receiving circuit receives at least one output signal currently outputted from at least one scan line. The processing circuit checks a quality of the at least one output signal currently outputted from the at least one scan line according to at least one specific standard, when the at least one output signal currently outputted from the at least one scan line is not qualified for a first quality requirement, the processing circuit indicates that the at least one output signal currently outputted from the at least one scan line does not comply with the at least one specific standard. The processing circuit further determines an examination result according to whether the at least one output signal currently outputted from the at least one scan line complies with the at least one specific standard and adjusts a configuration of the at least one scan line according to the examination result.

In the following, the invention is further illustrated by way of example, taking reference to the accompanying drawings. Thereof:
FIG. 1 is a block diagram illustrating an exemplary VBI data configuration apparatus according to the present invention,
FIG. 2 is an exemplary flowchart illustrating a method of auto-gating procedure according to an embodiment of the present invention,
FIG. 3 is an exemplary flowchart illustrating a method of auto-gating procedure according to another embodiment of the present invention,
FIG. 4 is an exemplary flowchart of an auto-detection procedure according to an embodiment of the present invention,
FIG. 5 is an exemplary flowchart of a dynamic-detection procedure according to an embodiment of the present invention, and
FIG. 6 is an exemplary flowchart of a dynamic standard configuration procedure according to an embodiment of the present invention.

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

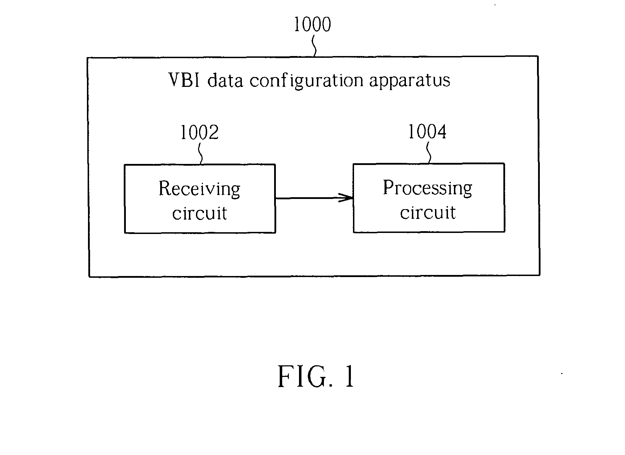

Please refer to FIG. 1. The present invention provides an exemplary vertical blanking interval (VBI) data configuration apparatus 1000, including a receiving circuit 1002 and a processing circuit 1004. The receiving circuit 1002 is for receiving at least one output signal currently outputted from at least one scan line. The processing circuit 1004, which is coupled to the receiving circuit 1002, applies an examination procedure to check a quality of the at least one output signal currently outputted from the at least one scan line according to at least one specific standard. In addition, the processing circuit 1004 further determines an examination result according to whether the at least one output signal currently outputted from the at least one scan line complies with the at least one specific standard and optionally adjusts a configuration of the at least one scan line according to the examination result if needed. It should be noted that the processing circuit 1004 may be implemented using pure hardware or a processor executing program codes. These all fall within the scope of the present invention. The operation of the VBI data configuration apparatus 1000 is detailed as below.

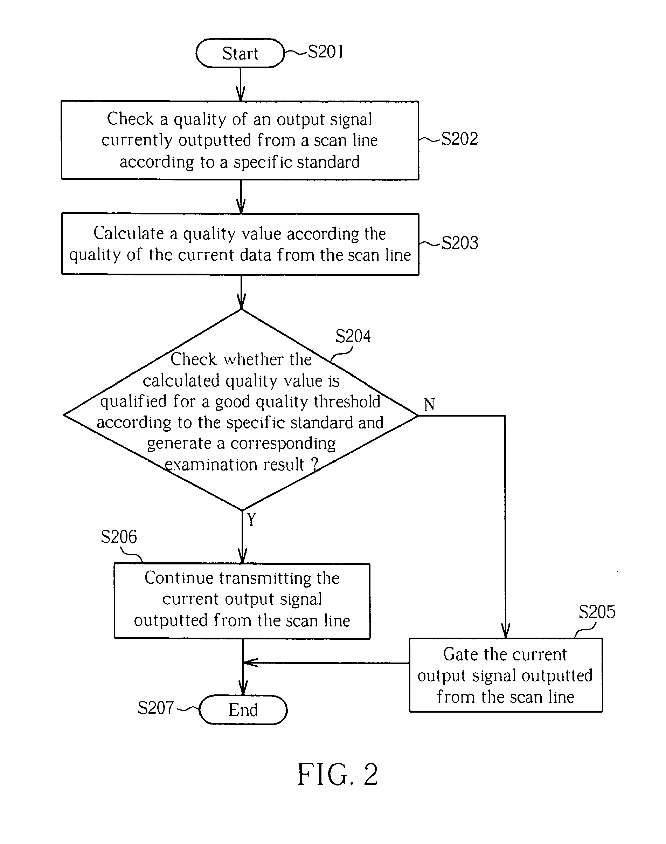

Please refer to FIG. 2. FIG. 2 is an exemplary flowchart illustrating a method of auto-gating procedure according to an embodiment of the present invention. The steps of the auto-gating procedure may be summarized as follows:
S201: Start;
S202: Check a quality of an output signal currently outputted from a scan line according to a specific standard;
S203: Calculate a quality value according the quality of the current data from the scan line;
S204: Check whether the calculated quality value is qualified for a good quality threshold according to the specific standard and generate a corresponding examination result. If the calculated quality value exceeds the good quality threshold, go to step S206; otherwise, go to step S205;
S205: Gate the current output signal outputted from the scan line;
S206: Continue transmitting the current output signal outputted from the scan line;
S207: End.

Provided that the result is substantially the same, the steps of the auto-gating procedure are not required to be executed in the exact order shown in FIG. 2. In addition, the steps in FIG. 2 are not required to be executed sequentially, i.e., other steps may be inserted in between. For example, if the calculated quality value is proved unqualified in step S204, a step of requiring or checking for instruction of gating may be inserted optionally. Step S206 is performed only when it is confirmed to gate the output signal.

The auto-gating procedure is employed by the VBI data configuration apparatus 1000 shown in FIG. 1. In the first place, the receiving circuit 1002 will receive an output signal currently outputted from a scan line for a following processing circuit 1004 to apply an examination procedure to check whether the output signal currently outputted from the scan line is qualified for a specific standard or not (step S202). During the examination procedure, the output signal currently outputted from the scan line is verified whether it is qualified for a first quality requirement of the specific standard (e.g., a good quality threshold) or not. In addition, a quality value, which is for indicating an extent that the output signal currently outputted from the scan line complies with the specific standard, is calculated accordingly (step S203), and the processing circuit 1004 will further determine an examination result according to the calculated quality value and the good quality threshold. When the quality value exceeds the good quality threshold, implying that the output signal currently outputted from the scan line is good for following processing with the specific standard, the processing circuit 1004 may generate a positive examination result. When the quality value is less than the good quality threshold, the processing circuit 1004 may generate a negative examination result to indicate that the output signal currently outputted from the scan line is not suitable to be processed with the specific standard (step S204).

In an example, the examination result may be denoted by a gating flag "gating_flag". When a positive examination result is generated, the processing circuit 1004 may assign the gating flag "gating_flag" by a Boolean value "0", and when a negative examination result is generated, the processing circuit 1004 may assign the gating flag "gating_flag" by a Boolean value "1" instead.

Referring to the description above, when a negative examination result is generated, the processing circuit 1004 may optionally check whether an instruction of gating unqualified data is received or not and thereby adjust a configuration of the scan line accordingly, if it is required. If the negative examination result is generated and the instruction of gating unqualified data is received, the processing circuit 1004 may adjust the configuration of the scan line to gate the output signal currently outputted from the scan line to prevent the unqualified data from corrupting VBI data from the other scan lines (step S205). If no instruction of gating unqualified data is received or if the positive examination result is generated, the output signal (which is confirmed as VBI data complying the specific standard) currently outputted from the scan line may continue to be transmitted for following processing procedures (step S206).

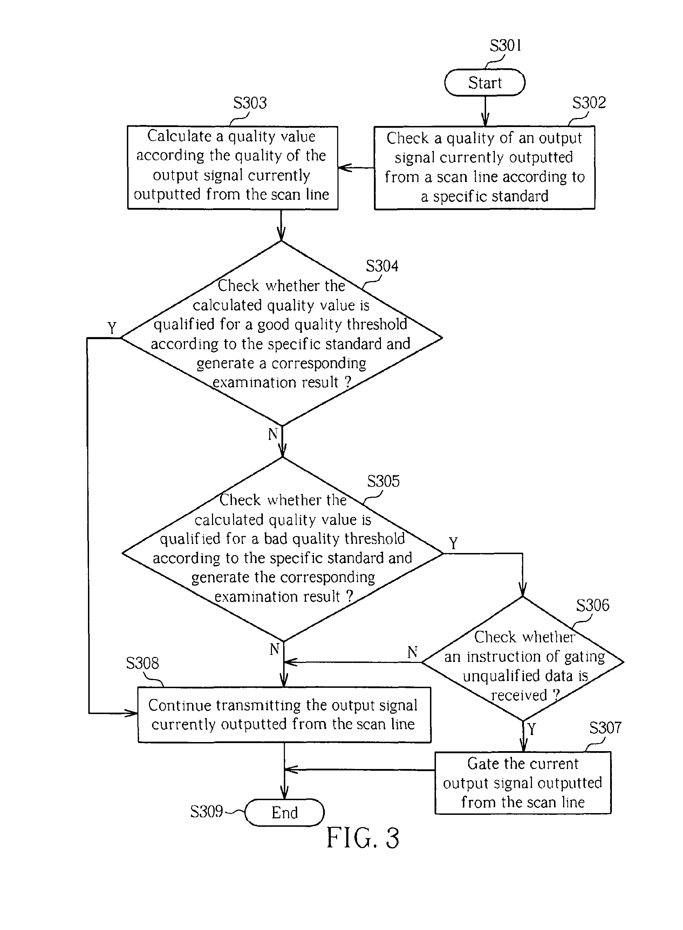

Please refer to FIG. 3. FIG. 3 is an exemplary flowchart illustrating a method of auto-gating procedure according to another embodiment of the present invention. The auto-gating procedure in this embodiment further introduces a second quality requirement to check the quality of the current Output signal outputted form the scan line. The steps of the auto-gating procedure can be summarized as follows:
S301: Start;
S302: Check a quality of an output signal currently outputted from a scan line according to a specific standard;
S303: Calculate a quality value according the quality of the output signal currently outputted from the scan line;
S304: Check whether the calculated quality value is qualified for a good quality threshold according to the specific standard and generate a corresponding examination result. If the calculated quality value exceeds the good quality threshold, go to step S308; otherwise, go to step S305;
S305: Check whether the calculated quality value is qualified for a bad quality threshold according to the specific standard and generate the corresponding examination result. If the calculated quality value is les than the bad quality threshold, go to step S306; otherwise, go to step S308;
S306: Check whether an instruction of gating unqualified data is received. If the instruction of gating unqualified data is received, go the step S307; otherwise, go to step S308;
S307: Gate the current Output signal outputted from the scan line;
S308: Continue transmitting the output signal currently outputted from the scan line;
S309: End.

Provided that the result is substantially the same, the steps of the alternative auto-gating procedure are not required to be executed in the exact order shown in FIG. 3. In addition, the steps in FIG. 3 are not required to be executed sequentially, i.e., other steps can be inserted in between. Please also note that some step is optionally adopted here only for illustration. For example, step S306 may be removed if it is not required to check the instruction of gating in some systems.

The alternative auto-gating procedure is employed by the VBI data configuration apparatus 1000 shown in FIG. 1. The major difference between the auto-gating procedure in FIG. 2 and the auto-gating procedure in FIG. 3 is the examination procedures and a second quality requirement. In this embodiment, during the examination procedure, the output signal currently outputted from the scan line is verified whether they are qualified for a first quality requirement of the specific standard (e.g., a good quality threshold) or not and a quality value is also calculated accordingly. When the quality value satisfies the good quality threshold, the processing circuit 1004 will generate a positive examination result (step S304); when the quality value doest not meet the good quality threshold, the processing circuit 1004 will further check the quality value with a second quality requirement, e.g., a bad quality threshold, to ensure that the output signal currently outputted from the scan line is not VBI data for the specific standard; when the quality value is even less than the bad quality threshold, the processing circuit 1004 will generate a negative examination result to indicate that the output signal currently outputted from the scan line is not suitable to be processed with the specific standard (step S305).

In addition, when a negative examination result is generated, the processing circuit 1004 may check if an instruction of gating unqualified data is received or not and thereby adjust a configuration of the scan line accordingly (step S306). If the negative examination result is generated and the instruction of gating unqualified data is received, the processing circuit 1004 will adjust the configuration of the scan line to gate the output signal currently outputted from the scan line to prevent the unqualified data from corrupting data from the other scan lines (step S307); if no instruction of gating unqualified data is received or if the positive examination result is generated, the current VBI data from the scan line will continue to be transmitted for following processing procedures (step S308). A person skilled in the art should readily understand the operation of the auto-gating procedure in FIG. 3 with description in the above paragraphs directed to the auto-gating procedure in FIG. 2, hence detailed description of the auto-gating procedure is omitted here for brevity.

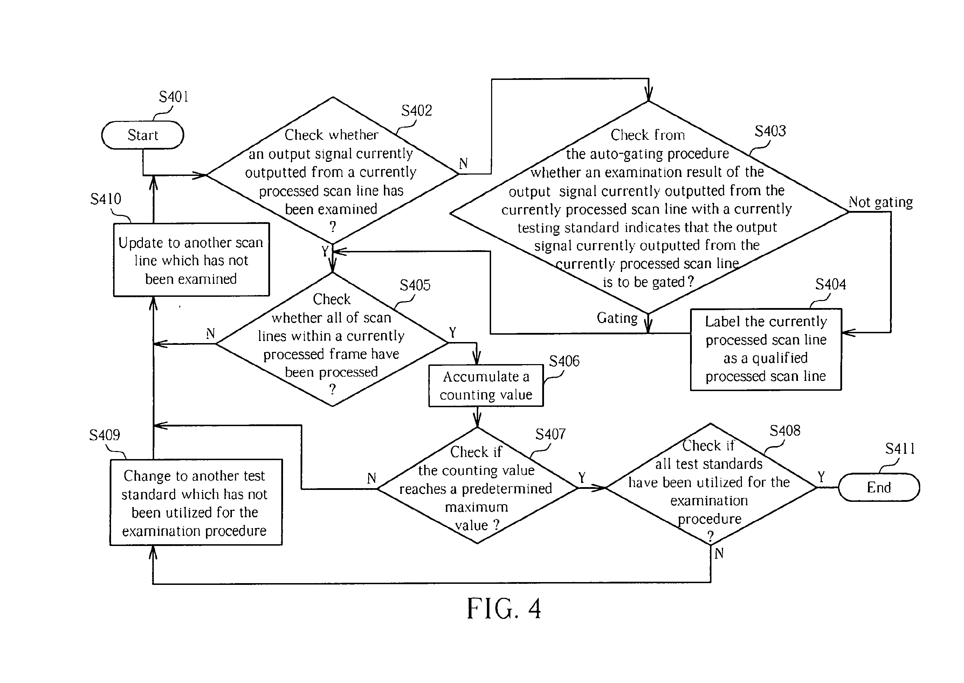

In a practical implementation, different scan lines in a video system may contain VBI data of different standards. Therefore, it is essential to determine the corresponding standard of each scan line further to determine the quality of VBI data form each scan line. The present invention further provides an exemplary auto-detection procedure to provide an initial configuration of each scan line in a video system. Please refer to FIG. 4, which is an exemplary flowchart of an auto-detection procedure according to an embodiment of the present invention. The examination result from the auto-gating procedure is utilized to assist herein. The steps of the auto-detection procedure can be summarized as follows:
S401: Start;
S402: Check whether an output signal currently outputted from a currently processed scan line has been examined. If the output signal currently outputted from the currently processed scan line has been examined, go to step S405; otherwise, go to step S403;
S403: Check from the auto-gating procedure whether an examination result of the output signal currently outputted from the currently processed scan line with a currently testing standard indicates that the output signal currently outputted from the currently processed scan line is to be gated. If the examination result indicates that the output signal currently outputted from the currently processed scan line is to be gated, go to step S405; otherwise, go to step S404;
S404: Label the currently processed scan line as a qualified processed scan line;
S405: Check whether all of scan lines within a currently processed frame have been processed. If all the scan lines have been processed, go to step S406; otherwise, go to step S41 0;
S406: Accumulate a counting value;
S407: Check if the counting value reaches a predetermined maximum value. If the counting value reaches the predetermined maximum value, go to step S408, otherwise, go to step S41 0;
S408: Check if all test standards have been utilized for the examination procedure. If all the test standards have been utilized for the examination procedure, go to step S411; otherwise, go to step S409;
S409: Change to another test standard which has not been utilized for the examination procedure;
S410: Update to another scan line which has not been examined;
S41 1 : End.

Provided that the result is substantially the same, the steps of the auto-detection procedure are not required to be executed in the exact order shown in FIG. 4. In addition, the steps in FIG. 4 are not required to be executed sequentially, i.e., other steps can be inserted in between.

The auto-detection procedure is employed by the VBI data configuration apparatus 1000 shown in FIG. 1. In this embodiment, scan lines composing a frame are processed with a plurality of test standards such that the scan lines are to be adjusted with proper configurations, respectively. An output signal currently outputted from a currently processed scan line is received by the receiving circuit 1002 and then processed by the processing circuit 1004. First of all, the processing circuit 1004 checks if the output signal currently outputted from a currently processed scan line has been examined or not (step S402). If the output signal currently outputted from a currently processed scan line has not been examined, the processing circuit 1004 detects an examination result from an examination procedure (e.g., the auto-gating procedure shown in FIG. 2 or FIG. 3) with a currently testing standard to check whether the output signal currently outputted from the currently processed scan line complies with the currently testing standard or not (step S403). If the output signal currently outputted from the currently processed scan line complies with the currently testing standard, the processing circuit 1004 labels the currently processed scan line as a qualified processed scan line such that no further examination procedure is required (step S404). For example, a flag "detect_flag[lineindex]" can be used as the aforementioned label. By way of example, when a scan line with a lineindex=X has been processed, the processing circuit 1004 sets the flag "detect_flag[X]" by "true" for the scan line; otherwise, the flag detect_flag[X] will remain as "false". When the output signal currently outputted from the currently processed scan line does not comply with the currently testing standard, the processing circuit 1004 will adjust the configuration of the currently processed scan line to gate the output signal currently outputted from the currently processed scan line.

After the currently processed scan line is processed, the processing circuit 1004 further checks if all the scan lines within the same frame have been processed by the processing circuit 1004 or not. If all the scan lines within the frame are processed, a counting value will be accumulated (step S406) until a maximum value M is reached (step S407). If the scan lines within the frame are not totally processed or the counting value has not reached the maximum value M yet, the processing circuit 1004 updates the currently processed scan line with another scan line (step S410), which has not been examined, and again applies the examination procedure with the currently testing standard to check whether the output signal currently outputted from the currently processed scan line (i.e., the updated scan line) complies with the currently testing standard or not.

If the counting value reaches the maximum value M, the processing circuit 1004 checks if all of the test standards have been utilized for the examination procedure (step S408). If not all the test standards have been utilized for the examination procedure, the processing circuit 1004 updates the currently testing standard with another test standard selected from the plurality of standards which have not been utilized for the examination procedure (step S409), and updates the currently processed scan line with another scan line which has not been examined (step S410). In this way, the processing may ensure that each scan line within the frame is properly adjusted to corresponding standard and those data from unqualified scan lines are gated.

Please note that the aforementioned procedures, including auto-gating procedure and auto-detection procedure, are performed at one time for a single scan line and a specific standard only. This is not supposed to be a limitation to the present invention, however. For example, either auto-gating procedure or the auto-detection procedure can be performed upon a plurality of scan lines according to one or more specific standards simultaneously, and these variations in design still fall within the scope of the present invention.

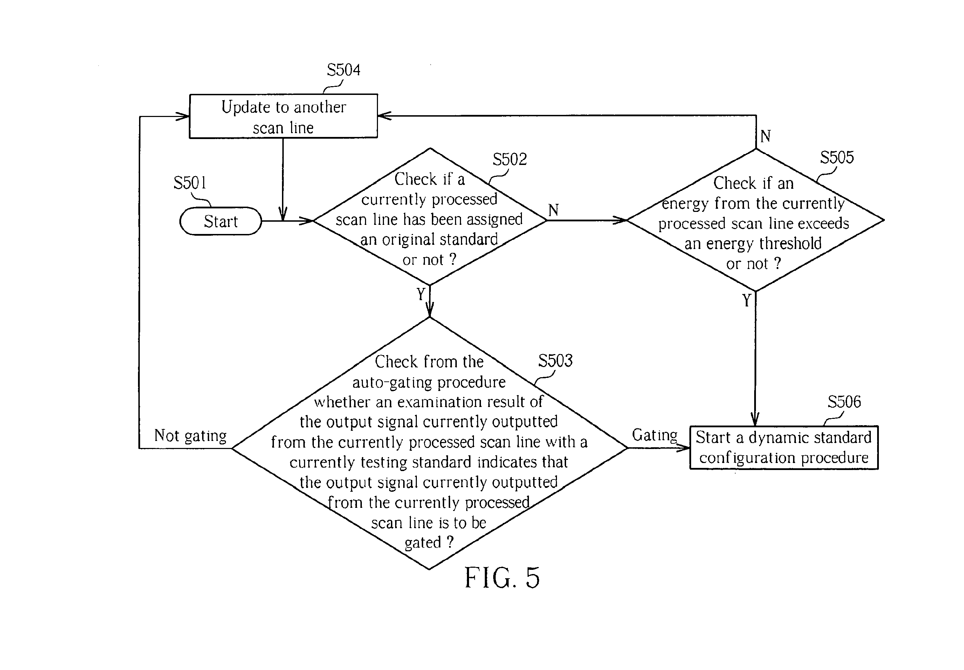

However, VBI data from a scan line may correspond to different standards from time to time depending on the data source. One scan line may transmit VBI data of one standard and change to VBI data of another standard or even stop transmitting any VBI data after a certain time. In addition, one scan line which does not transmit any VBI data may start to transmit VBI data by users' requirements. An initial configuration of all scan lines within a frame is usually not sufficient for time-varying scan lines. Therefore some dynamic modifications are required. To deal with such a time-varying case, the present invention further provides a dynamic-detection procedure to detect a variation of a scan line configuration. Please refer to FIG. 5. FIG. 5 is an exemplary flowchart of a dynamic-detection procedure according to an embodiment of the present invention. The steps of the dynamic-detection procedure can be summarized as follows:
S501: Start;
S502: Check if a currently processed scan line has been assigned an original standard or not. If the currently processed scan line has been assigned the original standard, go to step S503; otherwise, go to step S505;
S503: Check from the auto-gating procedure whether an examination result of the output signal currently outputted from the currently processed scan line with a currently testing standard indicates that the output signal currently outputted from the currently processed scan line is to be gated, wherein the currently testing standard is the original standard assigned to the currently processed scan line. If the examination result indicates that the output signal currently outputted from the currently processed scan line is to be gated, go to step S506; otherwise, go to step S504;
S504: Update to another scan line;
S505: Check if an energy from the currently processed scan line exceeds an energy threshold or not. If the energy from the currently processed scan line exceeds the energy threshold, go to step S506; otherwise, go to step S504;
S506: Start a dynamic standard configuration procedure.

Provided that the result is substantially the same, the steps of the dynamic-detection procedure are not required to be executed in the exact order shown in FIG. 5. In addition, the steps in FIG. 5 are not required to be executed sequentially, i.e., other steps can be inserted in between.

The dynamic-detection procedure is employed by the VBI data configuration apparatus 1000 shown in FIG. 1. First of all, the processing circuit 1004 checks if a currently processed scan line has been assigned an original standard or not (step S502). If the currently processed scan line has been assigned the original standard, the processing circuit 1004 applies the examination procedure (e.g., the auto-gating procedure in FIG. 1) for data from the currently processed scan line with the original standard to further check if the corresponding standard is still suitable for the original processed scan line (step S503). If an examination result indicates that the output signal currently outputted from the currently processed scan line still corresponds to the original standard, the processing circuit 1004 updates the currently processed scan line with another scan line (step S504). On the other hand, if the examination result indicates that the Output signal outputted from the currently processed scan line does not correspond to the original standard, the processing circuit 1004 then starts a dynamic standard configuration procedure for the currently processed scan line (step S506).

However, if the currently processed scan line has not been assigned an original standard, which indicates that the output signal currently outputted from the currently processed scan line is gated, the processing circuit 1004 checks if the energy from the currently processed scan line exceeds an energy threshold (step S505). If the energy from the currently processed scan line exceeds the energy threshold, meaning that there may be signals transmitted in the currently processed scan line, the processing circuit 1004 then starts a dynamic standard configuration procedure for the currently processed scan line (step S506). If the energy from the currently processed scan line does not exceed the energy threshold, the processing circuit 1004 may regard that there is no available VBI data transmitted and update the currently processed scan line with another scan line to continue the dynamic-detection procedure (step S504).

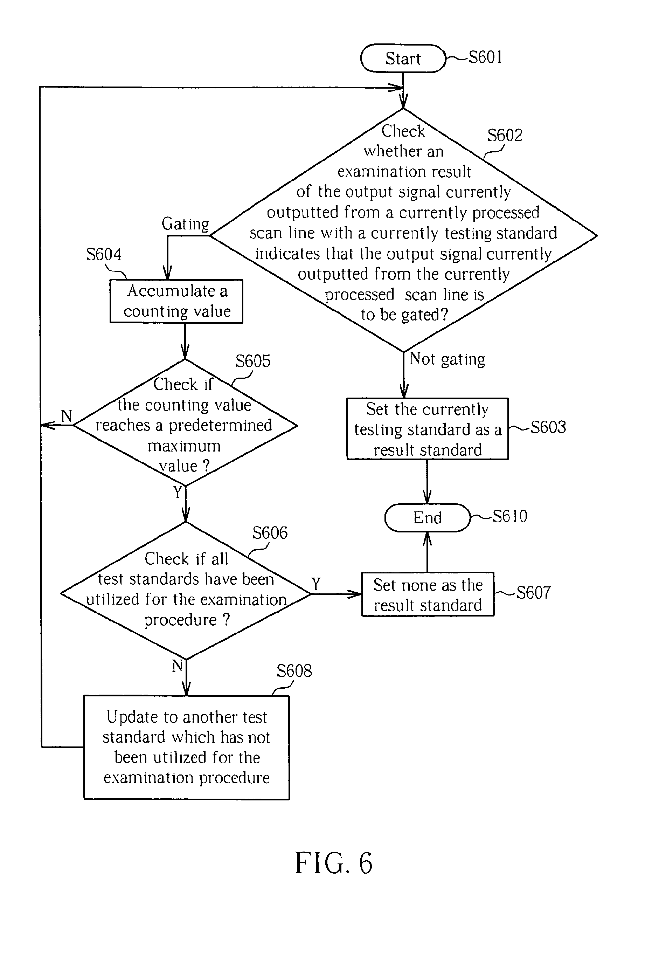

The flowchart shown in FIG. 5 only illustrates how to derive a scan line which needs to be reassigned a standard. To further detail the dynamic-detection procedure, please refer to FIG. 6. FIG. 6 is an exemplary flowchart of a dynamic standard configuration procedure according to an embodiment of the present invention. The steps of the dynamic standard configuration procedure can be summarized as follows:
S601: Start;
S602: Check whether an examination result of the output signal currently outputted from a currently processed scan line with a currently testing standard indicates that the output signal currently outputted from the currently processed scan line is to be gated. If the examination result indicates that the Output signal outputted from the currently processed scan line is to be gated, go to step S604; otherwise, go to step 5603;
S603: Set the currently testing standard as a result standard;
S604: Accumulate a counting value;
S605: Check if the counting value reaches a predetermined maximum value. If the counting value reaches the predetermined maximum value, go to step S607, otherwise, go to step S602;
5606: Check if all test standards have been utilized for the examination procedure. If all the test standards have been utilized for the examination procedure, go to step S608; otherwise, go to step S609;
S607: Set none as the result standard;
S608: Update to another test standard which has not been utilized for the examination procedure;
S610: End.

Provided that the result is substantially the same, the steps of the dynamic standard configuration procedure are not required to be executed in the exact order shown in FIG. 6. In addition, the steps in FIG. 6 are not required to be executed sequentially, i.e., other steps can be inserted in between.

The dynamic standard configuration procedure is employed by the VBI data configuration apparatus 1000 shown in FIG. 1. For a specific scan line which is to be processed with the dynamic standard configuration, the processing circuit 1004 checks an examination result of the output signal currently outputted from a currently processed scan line (i.e., the specific scan line) with a currently testing standard (step S602). If the examination result indicates that the output signal currently outputted from the currently processed scan line is not to be gated and complies with the currently testing standard properly, the processing circuit 1004 may set the currently testing standard as a result standard corresponding to the current processed scan line (step S603). On the other hand, if the examination result indicates that the output signal currently outputted from the currently processed scan line does not comply with the currently testing standard, the processing circuit 1004 may accumulate a counting value (step S604) until the counting value reaches a predetermined maximum value N (step S605). When the counting value reaches the predetermined maximum value N, the processing circuit 1004 checks if all test standards have been utilized for the examination procedure (step S606). If all the test standards have been utilized for the examination procedure, the processing circuit 1004 may set none as the result standard (step S607), which indicates that no proper VBI data is from the currently processed scan line. If there is at least one test standard which has not been utilized for the examination procedure, the processing circuit 1004 may update the currently testing standard with a test standard selected from the plurality of standards which have not been utilized for the examination procedure (step S608).

On the other hand, when the counting value is less than the predetermined maximum value N, the processing circuit 1004 again applies the examination procedure with the currently testing standard to check whether the output signal currently outputted from the updated scan line complies with the currently testing standard. The counting value in this example is to ensure that an accurate examination result is derived from a number of examination results (in this example, N examination results).

To summarize, exemplary embodiments of the present invention provide a method and related apparatus capable of detecting a standard corresponding to a scan line when unknown VBI data is transmitted in the scan line automatically and gating improper data from following processing stages. In addition, the exemplary method and related apparatus of the present invention are also capable of dynamically determining a most suitable standard when a standard VBI data from a scan line changes.

For completeness, various aspects of the invention are set out in the following numbered clauses:
Clause 1: A vertical blanking interval (VBI) data configuration method, comprising:
   receiving at least one output signal currently outputted from at least one scan line;
   utilizing a processing circuit to check the at least one output signal from the at least one scan line according to at least one specific standard, comprising:
      when the at least one output signal outputted currently from the at least one scan line is not qualified for a first quality requirement, indicating that the at least one output signal outputted currently from the at least one scan line does not comply with the at least one specific standard; and
   determining an examination result according to whether the at least one output signal outputted currently from the at least one scan line complies with the at least one specific standard; and
   adjusting configuration of the at least one scan line according to the examination result.
Clause 2: The VBI data configuration method of clause 1, further comprising:
   when the at least one output signal currently outputted from the at least one scan line is qualified for a second quality requirement, indicating that the at least one output signal currently outputted from the at least one scan line does comply with the at least one specific standard, wherein the second quality requirement is different from the first quality requirement.
Clause 3: The VBI data configuration method of clause 1, further comprising:
   when the at least one output signal currently outputted from the at least one scan line does not comply with the at least one specific standard, updating the at least one specific standard with another standard, and utilizing the processing circuit to check the quality of the at least one output signal currently outputted from the at least one scan line according to the updated specific standard.
Clause 4: The VBI data configuration method of clause 1, wherein the at least one specific standard is one of the following standards: a Teletext standard, a closed captioning standard, and a wide screen signaling standard.
Clause 5: The VBI data configuration method of clause 1, wherein:
   the step of receiving the at least one output signal currently outputted from the at least one scan line comprises:
      receiving a plurality of output signals currently outputted from a plurality of scan lines, respectively; and
   the step of utilizing the processing circuit to check the quality of the at least one output signal currently outputted from the at least one scan line according to the at least one specific standard comprises:
      simultaneously checking the qualities of the outputs signals currently outputted from the plurality of scan lines according to the specific standard, respectively.
Clause 6: The VBI data configuration method of clause 1, wherein:
   the step of receiving the at least one output signal currently outputted from the at least one scan line comprises:
      receiving a plurality of output signals currently outputted from a plurality of scan lines, respectively; and
   the step of utilizing the processing circuit to check the quality of the at least one output signal currently outputted from the at least one scan line according to the at least one specific standard comprises:
      simultaneously checking the qualities of the output signals currently outputted from the plurality of scan lines according to a plurality of specific standards.
Clause 7: The VBI data configuration method of clause 1, wherein the step of utilizing the processing circuit to check the quality of the at least one output signal currently outputted from the at least one scan line according to the at least one specific standard is performed when an output signal previously outputted from the at least one scan line has been checked complying with the at least one specific standard.
Clause 8: The VBI data configuration method of clause 7, further comprising:
   when the at least one output signal currently outputted from the at least one scan line does not comply with the specific standard, updating the at least one specific standard with another standard, and utilizing the processing circuit to check the quality of the at least one output signal currently outputted from the at least one scan line according to the updated specific standard.
Clause 9: The VBI data configuration method of clause 1, wherein the processing circuit is utilized to check the quality of the at least one output signal currently outputted from the at least one scan line according to the at least one specific standard when an output signal previously outputted from the at least one scan line has been checked not complying with any specific standard.
Clause 10: The VBI data configuration method of clause 9, further comprising:
   when the at least one output signal currently outputted from the at least one scan line does not comply with the specific standard, updating the at least one specific standard with another standard, and utilizing the processing circuit to check the quality of the at least one output signal currently outputted from the at least one scan line according to the updated specific standard.
Clause 11: The VBI data configuration method of clause 1, wherein the processing circuit is utilized to check the quality of the at least one output signal currently outputted from the at least one scan line according to the at least one specific standard when the at least one output signal previously outputted from the at least one scan line has been checked not complying with any specific standard and an energy of the current data from the at least one scan line is higher than an energy threshold.
Clause 12: The VBI data configuration method of clause 11, further comprising:
   when the at least one output signal currently outputted from the at least one scan line does not comply with the at least one specific standard, updating the at least one specific standard with another standard, and utilizing the processing circuit to check the quality of the at least one output signal currently outputted from the at least one scan line according to the updated specific standard.
Clause 13: The VBI data configuration method of clause 1, wherein the processing circuit further assigns a gating flag to the at least one scan line according to the examination result; wherein the gating flag is set by a first value when the at least one output signal currently outputted from the at least one scan line does not comply with the at least one specific standard, and is set by a second value different from the first value when the at least one output signal currently outputted from the at least one scan line does comply with the at least one specific standard.
Clause 14: A vertical blanking interval (VBI) data configuration apparatus, comprising:
   a receiving circuit, for receiving at least one output signal currently outputted from at least one scan line; and
   a processing circuit, coupled to the receiving circuit, capable of:
      checking a quality of the at least one output signal currently outputted from the at least one scan line according to at least one specific standard, wherein when the at least one output signal currently outputted from the at least one scan line is not qualified for a first quality requirement, the processing circuit further indicates that the at least one output signal currently outputted from the at least one scan line does not comply with the at least one specific standard;
      determining an examination result according to whether the at least one output signal currently outputted from the at least one scan line complies with the at least one specific standard; and
      adjusting a configuration of the at least one scan line according to the examination result.
Clause 15: The VBI data configuration apparatus of clause 14, wherein when the at least one output signal currently outputted from the at least one scan line is qualified for a second quality requirement, the processing circuit is capable of indicating that the at least one output signal currently outputted from the at least one scan line does comply with the at least one specific standard, where the second quality requirement is different from the first quality requirement.
Clause 16: The VBI data configuration apparatus of clause 14, wherein when the at least one output signal currently outputted from the at least one scan line does not comply with the specific standard, the processing circuit is further capable of updating the at least one specific standard with another standard, and checking the quality of the at least one output signal currently outputted from the at least one scan line according to the updated specific standard.
Clause 17: The VBI data configuration apparatus of clause 14, wherein the at least one specific standard is one of the following standards: a Teletext standard, a closed captioning standard, and a wide screen signaling standard.
Clause 18: The VBI data configuration apparatus of clause 14, wherein the at least one scan line comprises a plurality of scan lines, and the processing circuit is capable of simultaneously checking the quality of a plurality of output signals currently outputted from the plurality of scan lines according to the at least one specific standard, respectively.
Clause 19: The VBI data configuration apparatus of clause 15, wherein the receiving circuit is for receiving the a plurality of output signals currently outputted from a plurality of scan lines, and the processing circuit is capable of simultaneously checking the quality of the output signals currently outputted from the plurality of scan lines according to a plurality of specific standards.
Clause 20: The VBI data configuration apparatus of clause 14, wherein the processing circuit is capable of checking the quality of the at least one output signal currently outputted from the at least one scan line according to the at least one specific standard when an output signal previously outputted from the at least one scan line has been checked complying with the at least one specific standard.
Clause 21: The VBI data processing circuit of clause 20, wherein when the at least one output signal currently outputted from the at least one scan line does not comply with the specific standard, the processing circuit is further capable of updating the at least one specific standard with another standard, and checking the quality of the at least one output signal currently outputted from the at least one scan line according to the updated specific standard.
Clause 22: The VBI data configuration apparatus of clause 14, wherein the processing circuit is capable of checking the quality of the at least one output signal currently outputted from the at least one scan line according to the at least one specific standard when an output signal previously outputted from the at least one scan line has been checked not complying with any specific standard.
Clause 23: The VBI data configuration apparatus of clause 22, wherein when the at least one output signal currently outputted from the at least one scan line does not comply with the specific standard, the processing circuit is further capable of updating the at least one specific standard with another standard, and checking the quality of the at least one output signal currently outputted from the at least one scan line according to the updated specific standard.
Clause 24: The VBI data configuration apparatus of clause 14, wherein the processing circuit is capable of checking the quality of the at least one output signal currently outputted from the at least one scan line according to the at least one specific standard when an output signal previously outputted from the at least one scan line has been checked by the examination procedure to not comply with any specific standard and an energy of the current data from the at least one scan line is higher than an energy threshold.
Clause 25: The VBI data configuration apparatus of clause 24, wherein when the at least one output signal currently outputted from the at least one scan line does not comply with the specific standard, the processing circuit is further capable of updating the at least one specific standard with another standard, and checking the quality of the at least one output signal currently outputted from the at least one scan line according to the updated specific standard.
Clause 26: The VBI data configuration apparatus of clause 14, wherein the processing circuit is further capable of assigning a gating flag to the at least one scan line according to the examination result; the gating flag is set by a first value when the at least one output signal currently outputted from the at least one scan line does not comply with the at least one specific standard, and is set by a second value different from the first value when the at least one output signal currently outputted from the at least one scan line does comply with the at least one specific standard.

All combinations and sub-combinations of above-described features also belong to the invention.

## Claims

1. A vertical blanking interval (VBI) data configuration method, comprising:
receiving at least one output signal currently outputted from at least one scan line;
**characterized by**
utilizing a processing circuit (1 004) to check the at least one output signal from the at least one scan line according to at least one specific standard, comprising:
when the at least one output signal outputted currently from the at least one scan line is not qualified for a first quality requirement, indicating that the at least one output signal outputted currently from the at least one scan line does not comply with the at least one specific standard; and
determining an examination result according to whether the at least one output signal outputted currently from the at least one scan line complies with the at least one specific standard; and
adjusting configuration of the at least one scan line according to the examination result.

2. The VBI data configuration method of claim 1, **characterized in that** the step of utilizing the processing circuit (1004) to check the quality of the at least one output signal currently outputted from the at least one scan line according to the at least one specific standard is performed when an output signal previously outputted from the at least one scan line has been checked complying with the at least one specific standard.

3. The VBI data configuration method of claim 1, **characterized in that** the processing circuit (1004) is utilized to check the quality of the at least one output signal currently outputted from the at least one scan line according to the at least one specific standard when an output signal previously outputted from the at least one scan line has been checked not complying with any specific standard.

4. The VBI data configuration method of claim 1, **characterized in that** the processing circuit (1004) is utilized to check the quality of the at least one output signal currently outputted from the at least one scan line according to the at least one specific standard when the at least one output signal previously outputted from the at least one scan line has been checked not complying with any specific standard and an energy of the current data from the at least one scan line is higher than an energy threshold.

5. The VBI data configuration method of any one of the preceding claims, further **characterized by**:
when the at least one output signal currently outputted from the at least one scan line does not comply with the at least one specific standard, updating the at least one specific standard with another standard, and utilizing the processing circuit (1004) to check the quality of the at least one output signal currently outputted from the at least one scan line according to the updated specific standard.

6. The VBI data configuration method of any one of claims 1 to 5, **characterized in that** the processing circuit (1004) further assigns a gating flag to the at least one scan line according to the examination result; wherein the gating flag is set by a first value when the at least one output signal currently outputted from the at least one scan line does not comply with the at least one specific standard, and is set by a second value different from the first value when the at least one output signal currently outputted from the at least one scan line does comply with the at least one specific standard.

7. A vertical blanking interval (VBI) data configuration apparatus (1000), comprising:
a receiving circuit (1002), for receiving at least one output signal currently outputted from at least one scan line; and
**characterized by**:
a processing circuit (1004), coupled to the receiving circuit, capable
of:
checking a quality of the at least one output signal currently outputted from the at least one scan line according to at least one specific standard, wherein when the at least one output signal currently outputted from the at least one scan line is not qualified for a first quality requirement, the processing circuit (1004) further indicates that the at least one output signal currently outputted from the at least one scan line does not comply with the at least one specific standard;
determining an examination result according to whether the at least one output signal currently outputted from the at least one scan line complies with the at least one specific standard; and
adjusting a configuration of the at least one scan line according to the examination result.

8. The VBI data configuration apparatus (1000) of claim 7, **characterized in that** the processing circuit (1004) is capable of checking the quality of the at least one output signal currently outputted from the at least one scan line according to the at least one specific standard when an output signal previously outputted from the at least one scan line has been checked complying with the at least one specific standard.

9. The VBI data configuration apparatus (1000) of claim 7, **characterized in that** the processing circuit (1004) is capable of checking the quality of the at least one output signal currently outputted from the at least one scan line according to the at least one specific standard when an output signal previously outputted from the at least one scan line has been checked not complying with any specific standard.

10. The VBI data configuration apparatus (1000) of claim 7, **characterized in that** the processing circuit (1004) is capable of checking the quality of the at least one output signal currently outputted from the at least one scan line according to the at least one specific standard when an output signal previously outputted from the at least one scan line has been checked by the examination procedure to not comply with any specific standard and an energy of the current data from the at least one scan line is higher than an energy threshold.

11. The VBI data configuration apparatus (1000) of any one of claims 7 to 10, **characterized in that** when the at least one output signal currently outputted from the at least one scan line does not comply with the at least one specific standard, the processing circuit (1004) is further capable of updating the at least one specific standard with another standard, and checking the quality of the at least one output signal currently outputted from the at least one scan line according to the updated specific standard.

12. The VBI data configuration apparatus (1000) of any one of claims 7 to 11, **characterized in that** the processing circuit (1004) is further capable of assigning a gating flag to the at least one scan line according to the examination result; the gating flag is set by a first value when the at least one output signal currently outputted from the at least one scan line does not comply with the at least one specific standard, and is set by a second value different from the first value when the at least one output signal currently outputted from the at least one scan line does comply with the at least one specific standard.
